# EUROPÄISCHE PATENTSCHRIFT

(11) **EP 3 155 392 B1**
(45) Veröffentlichungstag und Bekanntmachung des Hinweises auf die Patenterteilung: **13.01.2021**
(21) Anmeldenummer: 15727982.9
(22) Anmeldetag: 09.06.2015
(51) Int. Cl.: G01M 3/32

(54) **LECKPRÜFVORRICHTUNG UND VERFAHREN ANHAND DIFFERENZDRUCKMESSUNG MIT FOLIENKAMMER**
LEAK DETECTION SYSTEM AND METHOD USING DIFFERENTIAL PRESSURE MEASUREMENT WITH FILM CHAMBER
SYSTEME ET METHODE DE DETECTION DE FUITE UTILISANT UNE MESURE DE PRESSION DIFFÉRENTIELLE À L'AIDE D'UNE CHAMBRE À FILM

(30) Priorität: 12.06.2014 DE 102014211228
(43) Veröffentlichungstag der Anmeldung: 19.04.2017
(73) Patentinhaber: Inficon GmbH, 50968 Köln (DE)
(72) Erfinder: WETZIG, Daniel, 50999 Köln (DE); DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2015/062854
(87) Internationale Veröffentlichungsnummer: WO 2015/189219

(56) Entgegenhaltungen:
- EP-A1- 0 152 981
- EP-A1- 0 161 702
- EP-A1- 0 303 303
- WO-A1-81/01333
- DE-A1- 19 513 199
- DE-A1-102012 216 868
- FR-A1- 2 148 466
- US-B1- 6 513 366

## Beschreibung

Die Erfindung betrifft eine Leckprüfvorrichtung zur Messung des Differenzdrucks zwischen einer Prüfkammer und einer Referenzkammer sowie ein Verfahren zur Messung eines entsprechenden Differenzdrucks.

Es ist bekannt, die Druckdifferenz zwischen dem Innendruck in einem Prüfling und dem Innendruck in einer Referenzkammer zu messen. Bei dem Prüfling kann es sich um eine Lebensmittelverpackung handeln. Der Prüfling und die Referenzkammer werden vor der Differenzdruckmessung mit dem gleichen Überdruck beaufschlagt. Bei einem undichten Prüfling entsteht während der Differenzdruckmessung eine Druckdifferenz zwischen dem Prüfling und der Referenzkammer, weil der Überdruck durch das Leck aus dem Prüfling entweicht, während der Überdruck in der hermetisch abgeschlossenen Referenzkammer verbleibt. Die gemessene Druckdifferenz dient als Maß für die Leckrate des Prüflings. Der Vorteil der Differenzdruckmessung besteht darin, dass der Drucksensor nicht für die in dem Prüfling und in der Referenzkammer herrschenden Drücke ausgelegt sein muss. Beispielsweise können im dem Prüfling und in der Referenzkammer Drücke von 10 bar herrschen, während der Differenzdrucksensor nur für einen Bereich bis 100 mbar ausgelegt ist. Ein weiterer Vorteil besteht darin, dass die auf den Totaldruck innerhalb des Prüflings wirkenden Temperatureinflüsse in gleicher Weise auch auf den Druck in der Referenzkammer wirken und somit den Differenzdruck nicht beeinflussen.

In EP 0 313 678 B1 und EP 0 763 722 B1 wird jeweils eine Anordnung aus einer einen Prüfling enthaltenden Prüfkammer und einem Referenzdrucksystem, das von der Prüfkammer durch ein Absperrventil trennbar ist, beschrieben, wobei der Differenzdruck zwischen dem Druck innerhalb der Prüfkammer und dem Druck innerhalb des Referenzdrucksystems mit einem Differenzdrucksensor gemessen wird. Die Prüfkammer und das Referenzdrucksystem sind jeweils mit starren Wänden ausgebildet, wobei die Prüfkammer zur Aufnahme des Prüflings ausgebildet ist und das Referenzdrucksystem als Leitungsstück ausgebildet ist. Darüber hinaus wird eine Referenzkammer beschrieben, die zur Beaufschlagung der Prüfkammer mit einem vorgegebenen Referenzdruck dient. Prüfanordnungen dieser oder ähnlicher Art sind beispielsweise auch offenbart in DE 10 2012 216 868 A1, WO 81/01333 A1, DE 195 13 109 A1 und FR 2148466 A1.

EP 0 303 303 A1 beschreibt eine Anordnung, bei der in zwei identischen Prüfkammern jeweils mit einem Drucksensor der Prüfkammerdruck gemessen und von einer zentralen Steuereinheit 28 erfasst wird. Dieses Dokument bezieht sich auf die EP0152981, die eine Folienkammer als Prüfkammer benutzt.

Desweiteren sind Folienkammern zur Dichtheitsprüfung an formschlaffen Prüflingen bekannt. In DE 19722262 A1 wird beschrieben, eine Prüfkammer aus einer Folie zu bilden, um den Prüfraum, das heißt also den zwischen dem Prüfling und der Prüfkammer verbleibenden Raum, zu minimieren. Um einen formschlaffen Prüfling, zum Beispiel einen Verpackungsbeutel, in einer Folienkammer prüfgasfrei auf Dichtheit zu testen wird die den Prüfling enthaltende Folienkammer evakuiert und anschließend der Totaldruckanstieg innerhalb der Folienkammer im Bereich außerhalb des Prüflings gemessen. Die den Prüfling umhüllende Folie verhindert zudem ein Platzen des Prüflings.

Um den Druckanstieg in der Folienkammer ausreichend präzise messen zu können, muss der Totaldruck innerhalb der Folienkammer zuvor auf einen ausreichend geringen Wert evakuiert werden. Um mit Totaldruckmessköpfen eine ausreichende Messgenauigkeit zu erzielen ist ein Druck (Vakuum) von weniger als 100 mbar erforderlich. Typischerweise werden Drücke von weniger als 10 mbar und vorzugsweise weniger als 1 mbar erreicht. Bei derart geringen Drücken bewirken Gasanteile, die aus der Folienwand der Folienkammer und aus einem zwischen dem Prüfling und der Folienwand typischerweise angeordneten Vlies ausgasen, einen Druckanstieg.

Der Erfindung liegt die Aufgabe zugrunde, eine Leckprüfvorrichtung zur genaueren Messung des Differenzdrucks zwischen einer Prüfkammer und einer Referenzkammer bereitzustellen.

Die erfindungsgemäße Vorrichtung ist definiert durch die Merkmale von Patentanspruch 1.

Die Prüfkammer und die Referenzkammer weisen jeweils ein Volumen umschließende Wände auf. Mindestens ein Bereich der Prüfkammerwand und der Referenzkammerwand ist jeweils aus einer flexiblen Folie gebildet. Im Folgenden wird als Prüfkammerverhältnis das Verhältnis des Volumens der Prüfkammer zu der an das Prüfkammervolumen angrenzenden Oberfläche des flexiblen Wandbereichs bezeichnet. Als Referenzkammerverhältnis wird im Folgenden das Verhältnis des Volumens der Referenzkammer zu der an das Referenzkammervolumen angrenzenden Oberfläche des flexiblen Wandbereichs der Referenzkammer bezeichnet. Erfindungsgemäß sind das Prüfkammerverhältnis und das Referenzkammerverhältnis im Wesentlichen gleich, das heißt bis auf eine Abweichung von maximal 20 Prozent gleich. Dadurch wird erreicht, dass der Druckanstieg in der Prüfkammer und in der Referenzkammer durch aus dem flexiblen Wandbereich ausgasende Gasanteile gleich ist und die Druckdifferenz zwischen dem Referenzkammervolumen und dem Prüfkammervolumen nicht beeinflusst. Die Prüfkammer und die Referenzkammer sollten möglichst gleichartig, zum Beispiel jeweils als Folienkammer, ausgebildet sein, damit die auf den Druck innerhalb der jeweiligen Kammer wirkenden Einflüsse möglichst gleich sind und den Differenzdruck nicht beeinflussen. Das Volumen der Referenzkammer sollte möglichst kleiner als das oder gleich dem Volumen innerhalb der Prüfkammer sein.

Bei den bekannten Verfahren zur Messung des Differenzdrucks zwischen einer Prüfkammer und einem Referenzvolumen waren die Prüfkammer und die Referenzkammer verschieden. Auf den jeweiligen Druck wirkende äußere Einflüsse haben sich auf den Prüfkammerdruck anders ausgewirkt, als auf den Druck in dem Referenzvolumen. Bei Prüfkammern mit flexiblen Wandbereichen, wie zum Beispiel Folienkammern, wurde die Differenzdruckmessung bislang nicht eingesetzt, weil ausgasende Gasanteile den Differenzdruck beeinflusst haben und das Messergebnis verfälschen. Bei Folienkammern wurde bislang vielmehr der Anstieg des Totaldrucks innerhalb der Folienkammer gemessen, ohne diesen mit einem Referenzdruck einer Referenzkammer, die als Folienkammer ausgebildet ist, zu vergleichen.

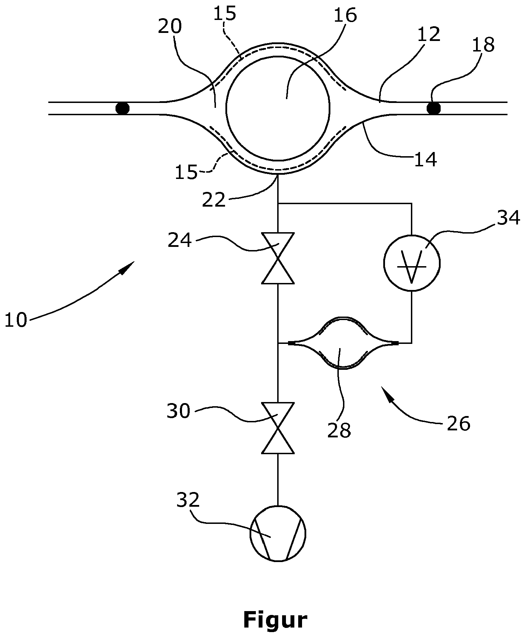

Im Folgenden wird anhand der Figur ein Ausführungsbeispiel näher erläutert. Die Figur zeigt eine schematische Darstellung der Leckprüfvorrichtung.

Die Prüfkammer 10 ist eine aus zwei Folienlagen 12, 14 bestehende Folienkammer. Die beiden Folien 12, 14 umschließen den Prüfling 16. Im Randbereich außerhalb des Prüflings 16 sind die beiden Folienlagen 12, 14 durch einen Dichtring 18 gasdicht miteinander verbunden. An ihrer inneren, dem Volumen 20 der Prüfkammer zugewandten Seite weist jede Folie 12, 14 eine in der Figur gestrichelt dargestellte Vlieslage 15 auf, die eine verbesserte Gasströmung um den Prüfling und somit ein verbessertes Evakuieren ermöglicht. Alternativ kann anstelle der Vlieslagen 15 eine raue Oberfläche jeder Folienlage 12, 14 eingesetzt werden, um das Evakuieren zu erleichtern.

Das Volumen 20 der Prüfkammer 10 ist über einen Gasanschluss 22 und ein erstes Absperrventil 24 mit einer Referenzkammer 26 gasleitend verbunden. Durch Sperren des ersten Absperrventils 24 wird der Gasleitungsweg zwischen dem Volumen 28, das kleiner als das Prüfkammervolumen 20 ist, innerhalb der Referenzkammer 26 und dem Prüfkammervolumen 20 hermetisch gesperrt. Das erste Absperrventil 24 und die Referenzkammer 26 sind über ein zweites Absperrventil 30 gasleitend mit einer Vakuumpumpe 32 verbunden. Die Vakuumpumpe 32 evakuiert im geöffneten Zustand des zweiten Absperrventils 30 die Referenzkammer 26. Im geöffneten Zustand beider Absperrventile 24, 30 evakuiert die Vakuumpumpe 32 die Prüfkammer 10 und die Referenzkammer 26.

Ein Differenzdrucksensor 34 ist gasleitend sowohl mit dem Prüfkammervolumen 20 als auch mit dem Referenzkammervolumen 28 verbunden. Ein Gasaustausch zwischen der Prüfkammer 10 und der Referenzkammer 26 ist über den Differenzdrucksensor 34 nicht möglich.

Bei der Referenzkammer 26 handelt es sich ebenfalls um eine Folienkammer, die von gleicher Art wie die Prüfkammer 10 ausgebildet ist. Die Referenzkammer 26 weist also ebenfalls zwei Folienlagen auf, die durch einen Dichtring gasdicht miteinander verbunden sind. An der inneren, dem Volumen 28 der Referenzkammer 26 zugewandten Seite weist jede Folie der Referenzkammer 26 eine gestrichelt dargestellte Vlieslage auf. Alternativ kann die Vlieslage durch eine raue Oberfläche der betreffenden Folienlage ersetzt werden.

Im nicht evakuierten Zustand bildet das Verhältnis aus Prüfkammervolumen 20 zu der Summe der beiden an das Volumen 20 angrenzenden Oberflächen der beiden Folienlagen 12, 14 ein Verhältnis (Prüfkammerverhältnis), das gleich dem entsprechenden Verhältnis aus Referenzkammervolumen 28 und der Summe der an das Volumen 28 angrenzenden Oberflächen der Folienlagen der Referenzkammer 26 (Referenzkammerverhältnis) ist. Die aus den jeweiligen Folienlagen ausgasenden Gasanteile, die in das jeweilige Innenvolumen 20, 28 gelangen, beeinflussen den Druck in dem Prüfkammervolumen 20 und den Druck in dem Referenzkammervolumen 28 in gleichem Maße. Die von dem Differenzdrucksensor 34 gemessene Druckdifferenz wird durch diese Gasanteile nicht beeinflusst.

Zum Evakuieren der Prüfkammer 10 und der Referenzkammer 26 wird die Vakuumpumpe 32 mit geöffneten Absperrventilen 24, 30 betrieben. Dabei wird beispielsweise ein Druck von 250 mbar innerhalb der Prüfkammer 10 erzielt. Anschließend wird das zweite Absperrventil 30 geschlossen und gewartet, bis der Druck innerhalb der Prüfkammer 10 gleich dem Druck innerhalb der Referenzkammer 26 ist. Sobald der Druckausgleich zwischen den beiden Kammern 10, 26 erfolgt ist, wird auch das erste Absperrventil 24 geschlossen und mit Hilfe des Differenzdrucksensors 34 die Druckdifferenz zwischen dem Druck in dem Prüfkammervolumen 20 und dem Druck in dem Referenzkammervolumen 28 gemessen und beobachtet. Eine Veränderung dieses Differenzdrucks dient als Hinweis auf ein Leck des Prüflings 16. Anhand der Differenzdruckänderung kann die Leckrate des Prüflings 16 bestimmt werden.

## Patentansprüche

1. Leckprüfvorrichtung zur Messung des Differenzdrucks zwischen einer Prüfkammer (10) und einer Referenzkammer (26), die durch ein erstes Absperrventil (24) von der Prüfkammer (10) gasdicht abtrennbar ist, wobei ein Differenzdrucksensor (34) mit der Referenzkammer und der Prüfkammer (10) verbunden ist, um die Druckdifferenz zwischen dem Innendruck der Referenzkammer (26) und dem Innendruck der Prüfkammer (10) zu messen,
**dadurch gekennzeichnet,**
**dass** die Prüfkammer (10) und die Referenzkammer (26) jeweils als Folienkammer ausgebildet sind, wobei das Referenzkammervolumen (28) kleiner als das Prüfkammervolumen (20) ist und das Verhältnis des Prüfkammervolumens (20) zu der Oberfläche des an das Prüfkammervolumen (20) angrenzenden flexiblen Wandbereichs der Prüfkammer (10) und das Verhältnis des Referenzkammervolumens (28) zu der Oberfläche des an das Referenzkammervolumen angrenzenden flexiblen Wandbereichs der Referenzkammer (26) im Wesentlichen gleich sind, indem sie um maximal 20 Prozent voneinander abweichen.

2. Leckprüfvorrichtung nach einem der vorhergehenden Ansprüche, **dadurch gekennzeichnet, dass** die Prüfkammer (10) und die Referenzkammer (26) gleichartig ausgebildet sind.

3. Leckprüfvorrichtung nach einem der vorhergehenden Ansprüche, **dadurch gekennzeichnet, dass** die an das jeweilige Innenvolumen (20, 28) angrenzenden Innenseiten der flexiblen Wandbereiche der Prüfkammer (10) und der Referenzkammer (26) jeweils mit einer Vlieslage versehen sind.

4. Leckprüfvorrichtung nach einem der vorhergehenden Ansprüche, **dadurch gekennzeichnet, dass** die Verhältnisse Kammervolumen/Oberfläche des flexiblen Wandbereichs der Prüfkammer (10) und der Referenzkammer (26) um maximal 5 Prozent abweichen.

5. Leckprüfvorrichtung nach einem der vorhergehenden Ansprüche, **dadurch gekennzeichnet, dass** das erste Absperrventil (24) und die Referenzkammer (26) durch ein zweites Absperrventil (30) mit einer Vakuumpumpe (32) zum Evakuieren der Prüfkammer (10) und der Referenzkammer (26) verbunden sind.

6. Verfahren zur Messung des Differenzdrucks zwischen einer Prüfkammer (10) und einer Referenzkammer (26) mit der Leckprüfvorrichtung nach dem vorhergehenden Anspruch,
**dadurch gekennzeichnet,**
**dass** zum Evakuieren der Prüfkammer (10) und der Referenzkammer (26) mit der Vakuumpumpe (32) beide Absperrventile (24, 30) geöffnet sind,
**dass** beim Erreichen eines vorgegebenen Drucks in der Prüfkammer (10) das zweite Absperrventil (30) geschlossen wird und
**dass** vor Beginn der Differenzdruckmessung das erste Absperrventil (24) geschlossen wird.

## Claims

1. Leak detection device for measuring the differential pressure between a test chamber (10) and a reference chamber which can be separated from the test chamber (10) in a gas-tight manner by a first check valve (24), wherein a differential pressure sensor (34) is connected to the reference chamber and to the test chamber (10) in order to measure the differential pressure between the internal pressure of the reference chamber and the internal pressure of the test chamber (10),
**characterized in that**
the test chamber (10) and the reference chamber (26) are each formed as a film chamber, wherein the reference chamber volume (28) is smaller than the test chamber volume (20) and the ratio of the test chamber volume (20) to the surface area of the flexible wall region of the test chamber (10) adjacent to the test chamber volume (20) and the ratio of the reference chamber volume (28) to the surface area of the flexible wall region of the reference chamber (26) adjacent to the reference chamber volume are substantially equal **in that** they differ by a maximum of 20 percent.

2. Leak detection device of one of the preceding claims, **characterized in that** the test chamber (10) and the reference chamber (26) are of a similar design.

3. Leak detection device of one of the preceding claims, **characterized in that** the inner sides of the flexible wall regions of the test chamber (10) and the reference chamber, which are adjacent the respective inner volume (20, 28), are each provided with a nonwoven layer.

4. Leak detection device of one of the preceding claims, **characterized in that** the ratios chamber volume/surface area of the flexible wall region of the test chamber (10) and of the reference chamber (26) differ by a maximum of 5 percent.

5. Leak detection device of one of the preceding claims, **characterized in that** the first check valve (24) and the reference chamber (26) are connected to a vacuum pump (32) via a second check valve (30), the vacuum pump serving to evacuate the test chamber (10) and the reference chamber (26).

6. Method for measuring the differential pressure between a test chamber (10) and a reference chamber (26) using the leak detection device of the preceding claims,
**characterized in that**
both check valves (24, 30) are opened to evacuate the test chamber (10) and the reference chamber (26) by means of the vacuum pump (32),
the second check valve (30) is closed when a predetermined pressure is reached in the test chamber (10), and
the first check valve (24) is closed before the start of the differential pressure measurement.

## Revendications

1. Dispositif de contrôle de fuite destiné à mesurer la pression différentielle entre une chambre d'essai (10) et une chambre de référence (26), laquelle peut être séparée de la chambre d'essai (10) de manière étanche au gaz par le biais d'une première vanne d'arrêt (24), dans lequel un capteur de pression différentielle (34) est relié à la chambre de référence et à la chambre d'essai (10) afin de mesurer la différence de pression entre la pression interne de la chambre de référence (26) et la pression interne de la chambre d'essai (10),
**caractérisé en ce que**
la chambre d'essai (10) et la chambre de référence (26) sont respectivement réalisées comme chambres en feuille, dans lequel le volume de chambre de référence (28) est inférieur au volume de chambre d'essai (20) et la proportion du volume de chambre d'essai (20) par rapport à la surface de la zone de paroi flexible de la chambre d'essai (10) contiguë au volume de chambre d'essai (20) et la proportion du volume de chambre de référence (28) par rapport à la surface de la zone de paroi flexible de la chambre de référence (26) contiguë au volume de chambre de référence sont sensiblement égales, différant l'une de l'autre de 20 % au maximum.

2. Dispositif de contrôle de fuite selon l'une des revendications précédentes, **caractérisé en ce que** la chambre d'essai (10) et la chambre de référence (26) sont réalisées de la même façon.

3. Dispositif de contrôle de fuite selon l'une des revendications précédentes, **caractérisé en ce que** les faces internes des zones de paroi flexibles de la chambre d'essai (10) et de la chambre de référence (26) contiguës aux volumes internes respectifs (20, 28) sont prévues respectivement dotées d'une couche non-tissée.

4. Dispositif de contrôle de fuite selon l'une des revendications précédentes, **caractérisé en ce que** les proportions volume de chambre/surface de la zone de paroi flexible de la chambre d'essai (10) et de la chambre de référence (26) diffèrent l'une de l'autre de 5 % au maximum.

5. Dispositif de contrôle de fuite selon l'une des revendications précédentes, **caractérisé en ce que** la première vanne d'arrêt (24) et la chambre de référence (26) sont reliées à une pompe à vide (32) par le biais d'une deuxième vanne d'arrêt (30) pour l'évacuation de la chambre d'essai (10) et de la chambre de référence (26).

6. Procédé de mesure de la pression différentielle entre une chambre d'essai (10) et une chambre de référence (26) avec le dispositif de contrôle de fuite selon la revendication précédente,
**caractérisé en ce que**
les deux vannes d'arrêt (24, 30) sont ouvertes pour l'évacuation de la chambre d'essai (10) et de la chambre de référence (26) avec la pompe à vide (32), **en ce que**
la deuxième vanne d'arrêt (30) est fermée lorsqu'une pression prédéfinie est atteinte dans la chambre d'essai (10) et **en ce que**
la première vanne d'arrêt (24) est fermée avant le début de la mesure de la pression différentielle.
